# EUROPÄISCHE PATENTSCHRIFT

(11) **EP 2 878 241 B1**
(45) Veröffentlichungstag und Bekanntmachung des Hinweises auf die Patenterteilung: **02.05.2018**
(21) Anmeldenummer: 14192943.0
(22) Anmeldetag: 13.11.2014
(51) Int. Cl.: A47J 31/44

(54) **Elektrisch betriebener Getränkebereiter, insbesondere elektrisch betriebene Kaffeemaschine, mit Dampflanze zum Milchaufschäumen**
Electrically operated beverage-making machine, in particular electric coffee machine, with steam lance for foaming milk
Dispositif électrique de préparation de boissons, en particulier machine à café électrique, doté de dispositif de vaporisation pour mousses de lait

(30) Priorität: 28.11.2013 DE 102013224400
(43) Veröffentlichungstag der Anmeldung: 03.06.2015
(73) Patentinhaber: WMF Group GmbH, 73312 Geislingen/Steige (DE)
(72) Erfinder: Schlee, Alexander, 73312 Geislingen (DE)
(74) Vertreter: Pfenning, Meinig & Partner mbB

(56) Entgegenhaltungen:
- DE-A1-102011 077 776
- US-A- 6 099 878

## Beschreibung

Die vorliegende Erfindung bezieht sich auf ein Verfahren zum Erhitzen und/oder Aufschäumen von Milch. Dabei wird ein elektrisch betriebener Getränkebereiter, insbesondere eine elektrisch betriebene Kaffeemaschine, mit einer zum Milchaufschäumen ausgebildeten Dampflanze eingesetzt. Die vorliegende Erfindung wird nachfolgend am Beispiel des Einsatzes von elektrisch betriebenen Kaffeemaschinen näher beschrieben, lässt sich jedoch auch bei anderen milchaufschäumenden Getränkebereitern (wie beispielsweise Verkaufsautomaten) einsetzen.

Aus dem Stand der Technik sind automatische Milchaufschäumer bekannt, die einen Milchvorratsbehälter sowie eine Milchzuführleitung, eine Dampfzuleitung und eine Luftzuleitung umfassen und (in der Regel in der Kaffeemaschine) mit einer Mischkammer und einer stromabwärts der Mischkammer folgenden Aufschäumkammer versehen sind. Siehe hier beispielsweise die DE 44 45 436 A1, die EP 2 229 851 A1 sowie die DE 10 2011 077 776 A1. Diese Systeme haben jedoch den Nachteil einer vergleichsweise schlechten Kontrolle der Schaumqualität und der Getränketemperatur sowie auch einer schlechten Kontrolle über den Hygienezustand des Milchschäumsystems.

Auch zeigt der Stand der Technik (DE 10 2011 077 776 A1) eine Vorrichtung zum Erhitzen und Aufschäumen eines Getränkeprodukts, insbesondere Milch, umfassend: einen Dampferzeuger, eine Druckluftquelle, eine Luftzuleitung, die mit der Druckluftquelle verbunden ist, zum Zuleiten von Luft von der Druckluftquelle zum Dampferzeuger, und eine Dampf-/Luftleitung, die mit dem Dampferzeuger verbunden ist, zum Zuleiten eines Dampf-/Luftgemischs vom Dampferzeuger in das Getränkeprodukt.

Auch zeigt die US 6,099,878 ein Verfahren zum Erhitzen und/oder Aufschäumen von Milch in einer mikroprozessorgesteuerten Kaffeemaschine. Dabei kann Milch in der Kaffeemaschine aufgeschäumt und/oder erhitzt werden, bevor diese Milch aus der Kaffeemaschine in ein externes Gefäß wie z.B. eine Tasse überführt wird.

Darüber hinaus sind aus dem Stand der Technik traditionelle Milchaufschäumer (insbesondere in Verbindung mit Espressomaschinen) bekannt, die Dampfrohre (nachfolgend im Rahmen der vorliegenden Erfindung auch als Dampflanze bezeichnet) einsetzen, die in der Regel außerhalb des Gehäuses der Espressomaschine angeordnet sind. An diesen in der Regel relativ zum Gehäuse der Espressomaschine verschwenkbaren Dampfrohren bzw. Dampflanzen befindet sich am maschinenabgewandten Ende eine Dampfdüse, aus der Dampf zum Aufschäumen von Milch in einem externen Gefäß, in das die Dampflanze eingetaucht wird, ausgeströmt werden kann. Hier ergibt sich eine vergleichsweise schlechte Kontrolle über die Getränkemenge (diese muss abgemessen in den externen Aufschäumbehälter gegeben werden oder es bleibt ein Rest zurück beim Umleeren in die Tasse). Außerdem ergibt sich ein zusätzlicher Handhabungsaufwand für das Nachfüllen des Aufschäumbehälters. Zudem fehlt die Möglichkeit der Milchkühlung.

Schließlich hat das traditionelle Aufschäumen mit Dampfrohr (bzw. Dampfausgaberohr oder Dampflanze) an einer Kaffeemaschine auch noch die folgenden Probleme: Der Ablauf im Tagesgeschäft beispielsweise in Cafes sieht in der Regel so aus, dass der Bediener der Maschine die benötigte Menge Milch z.B. für Cappuccino in ein schlankes, hohes Gefäß gibt und die Dampfdüse am Ende der Dampflanze in das Gefäß bis knapp unter die Milchoberfläche eintaucht und die Dampfzufuhr der Maschine betätigt. Durch Kreisen des Gefäßes und/oder des Dampfstrahls bzw. der Dampflanze wird die Milch in eine Wirbelbewegung versetzt und somit aufgeschäumt. Für heiße Milch wird das Dampfrohr tief in das externe Gefäß eingetaucht und mit Dampf durchströmt. Danach wird die Milch oder der Milchschaum aus dem externen Gefäß ausgegossen und auf die Tassen verteilt. Je nach Schätzvermögen des Bedieners reicht die Menge exakt aus oder kann zu wenig sein (so dass ein erneuter Aufschäumschritt erfolgen muss). Um einen erneuten Aufschäumschritt zu verhindern, wird in der Regel vom Bediener immer zu viel Milch verwendet, die dann eigentlich aus dem externen Gefäß aus hygienischen und geschmacklichen Gründen entfernt werden sollte. Häufig verbleibt jedoch dieser Rest aufgeschäumter Milch im Gefäß und wird bei der nächsten Anforderung eines Getränkes mit Milchschaum mit frischer Milch aufgefüllt und weiterverwendet.

Aufgabe der vorliegenden Erfindung ist es somit, ein Verfahren unter Verwendung eines elektrisch betriebenen Getränkebereiters, insbesondere einer elektrisch betriebenen Kaffeemaschine, mit Dampflanze zur Verfügung zu stellen (also ein entsprechendes Erhitzungs- und/oder Aufschäumverfahren für Milch), das die Nachteile des Standes der Technik verhindert, insbesondere also eine verbesserte Kontrolle über Schaumqualität und Hygienezustand des Milchschäumsystems ermöglicht, das hilft, die aufzuschäumende Milchmenge exakt zu dosieren und das somit auch ein Verschwenden von Milch (bei Einhaltung der Hygienevorschriften) verhindert.

Diese Aufgabe wird durch ein Verfahren gemäß Anspruch 1 gelöst.

Nachfolgend wird die vorliegende Erfindung zunächst allgemein, dann anhand von Ausführungsbeispielen beschrieben. Die einzelnen in den Ausführungsbeispielen miteinander in Kombination gezeigten Merkmale bzw. Verfahrensschritte müssen dabei im Rahmen der Erfindung nicht genau in den gezeigten Beispielkonfigurationen verwirklicht sein. Insbesondere kann die Verwendung einzelner Bauelemente und/oder Verfahrensschritte auch weggelassen werden oder auf andere Art und Weise im Verfahrensablauf kombiniert werden. Bereits einzelne der gezeigten Merkmale können für sich eine Verbesserung des Standes der Technik darstellen.

Die Grundidee der vorliegenden Erfindung basiert darauf, einzelne Vorgehensweisen und Systemkomponenten auf eine ungewöhnliche Art und Weise zu kombinieren. So kann eine erfindungsgemäß eingesetzte Kaffeemaschine mit einer Steuerung versehen werden, eine Dampflanze umfassen, eine optionale Luftzuführung umfassen und in Verbindung mit einem externen Milchvorratsbehältnis eingesetzt werden, wobei dieses externe Milchvorratsbehältnis optional gekühlt werden kann. Die Kaffeemaschine kann eine Milchzufuhrleitung (nachfolgend vereinfacht als Milchzuleitung bezeichnet) haben, die mit Flussunterbrechungsmitteln (z.B. Ventil zur Zufuhr der Milch) versehen sein kann.

Die Milchschaumzubereitung kann vorzugsweise in zwei zeitliche Phasen unterteilt sein: Eine erste Phase des Milchzuführens, wobei die Milch mittels z.B. einer Milchpumpe aus dem externen Vorratsbehälter über die Milchzuleitung und einen Dampfausgabekanal der Dampflanze in ein externes Aufschäumgefäß (z.B. Tasse) gepumpt werden kann. Oder die Milch kann über eine Strahlpumpengeometrie (Venturiprinzip) durch einen Dampfstrahl in das Aufschäumgefäß gepumpt werden. Die Strahlpumpe kann dabei so dimensioniert werden, dass die Milch geringstmöglich erhitzt wird.

Im zweiten Schritt kann die Milch erhitzt und/oder aufgeschäumt werden, indem die Milchzufuhr unterbrochen wird (Stoppen der Pumpe oder durch ein Ventil, welches die Milchzufuhr durch die Milchzuleitung unterbricht) und es kann dem externen Aufschäumgefäß solange Dampf über den Dampfausgabekanal der Dampflanze zugeführt werden, bis eine vorbestimmte SollTemperatur der Milch und/oder des Milchschaums im Aufschäumgefäß erreicht ist (dies kann beispielsweise mittels eines Temperatursensors oder einer Zeitsteuerung erreicht werden). Dabei kann dem Dampf soviel Luft zugeführt werden, dass eine gewünschte Schaumqualität erreicht werden kann.

Der Einsatz eines Temperatursensors ist jedoch nicht notwendig, die angesaugte Milchmenge, sowie die Vorratstemperatur und die Dampfmenge können vorgegeben werden (bzw. sind bekannt), daraus lässt sich die gewünschte Erhitzungs- und/oder Aufschäumzeit berechnen.

Ein erfindungsgemäßes Verfahren ist in Anspruch 1 beschrieben. (Nachfolgend wird die Erfindung jeweils an einer Kaffeemaschine dargestellt, was jedoch bezüglich unterschiedlicher michaufschäumender Typen von Getränkebereitern nicht einschränkend gemeint ist.)

Dabei ist die Dampflanze, also das Dampfausgaberohr, ein in der Regel längliches Durchflussrohr an dessen einem Ende eine Dampfdüse zur Dampfabgabe sitzt. In der Regel wird das der Dampfdüse gegenüberliegende Ende der Dampflanze (dampfstromaufwärtiges Ende) über ein flexibles Leitungsstück so mit dem Gehäuse der Kaffeemaschine verbunden, dass sich die gesamte Dampflanze außerhalb des Gehäuses befindet. In dieser Konstruktion kann die erfindungsgemäße Dampflanze zur Dampfabgabe in unterschiedlichen Richtungen verschwenkt werden. Die Dampflanze samt der Einmündung der Milchzuleitung in den Dampfausgabekanal der Dampflanze (und samt der gesamten Milchzuleitung) befindet sich somit vorzugsweise komplett außerhalb des Gehäuses der Kaffeemaschine.

Erfindungsgemäß weist die elektrisch betriebene Kaffeemaschine vorzugsweise neben der so ausgebildeten Dampflanze keine weitere Mischkammer (zum Zusammenführen von Milch einerseits und Dampf, Luft oder einer Dampf-Luft-Mischung andererseits) und auch keine zusätzliche Aufschäumkammer (zur weiteren Vermischung der in einer solchen Mischkammer bereits zusammengeführten unterschiedlichen Fluide wie Milch, Luft und Dampf) auf.

Eine grundlegende Idee der vorliegenden Erfindung ist es somit, dass die sich in der Regel außerhalb der Maschine befindende Dampflanze zeitlich nacheinander sowohl für das Durchströmen von Milch, als auch anschließend für das Durchströmen von Dampf, Luft oder einer Dampf-Luft-Mischung verwendet wird. Die Ansaugung der Milch kann dabei nach dem Strahlpumpenprinzip bzw. nach dem Venturiprinzip erfolgen, die eigentliche Vermischung der hierdurch in das externe Gefäß (Tasse) geführten Milchmenge mit Dampf, Luft und/oder eine Dampf-Luft-Mischung erfolgt anschließend nicht in der Dampflanze (bzw. zumindest nicht im Einmündungsbereich der Milchzuleitung in den Dampfausgabekanal) sondern im externen Gefäß (beispielsweise im Bereich des düsenseitigen Endes der Dampflanze). Statt des Venturiprinzips kann aber auch eine Milchpumpe eingesetzt werden.

Die Ausbildung der Dampflanze einerseits und der Milchzuleitung andererseits erfolgt vorzugsweise so, dass eine Entnahme von Milch über die Milchzuleitung aus dem externen Milchvorratsbehältnis erfolgt und eine Abgabe von entnommener, über die Milchzuleitung, die Einmündung und den Dampfausgabekanal geleiteter Milch über die Düse am einmündungsabgewandten Ende der Dampflanze in ein (getrennt vom externen Milchvorratsbehältnis) separat ausgebildetes externes Gefäß (Tasse oder Becher) erfolgt.

Die Einmündung der Milchzuleitung in den Dampfausgabekanal (die den Anschluss der Dampflanze zum fluidischen Anschließen der Milchzuleitung an den Dampfausgabekanal umfassen kann) kann als Venturikammer, also als Mischkammer einer Venturidüse, ausgebildet werden oder eine solche Kammer umfassen.

Es kann auch die Milchpumpe als Flussunterbrechungsmittel dienen (Vereinigung der Flussunterbrechungsfunktion und der Pumpfunktion in einem Bauelement).

Die Steuereinheit kann einen Mikrocontroller umfassen.

Die Milchzufuhrzeitraum Δtₘ beträgt vorzugsweise zwischen 8 und 22 Sekunden, der Aufschäum- und/oder Erhitzzeitraum Δtₐₑ beträgt vorzugsweise zwischen 10 und 15 Sekunden. Die vorbestimmte, zu erreichende Temperatur von Milch und/oder Milchschaum im externen Gefäß (bevorzugt gemessen über den Temperatursensor) beträgt vorzugsweise zwischen 60°C und 70°C.

Es kann auch solange aufgeschäumt werden, bis eine vorbestimmte Schaumqualität erreicht ist. Dazu kann ein Speicher (z.B. als Teil der Steuereinheit) vorgesehen sein, in dem in einer Look-Up-Tabelle Zeitintervalle und relative Mengenverhältnisse von Dampf und Luft (in einer Dampf-Luft-Mischung) für verschiedene zu erreichende Schaumqualitäten bei definierten Milchmengen abgelegt und angewählt werden können. Die vorbestimmte erreichte Temperatur bezieht sich dabei in der Regel auf die Milch und/oder den Milchschaum im externen Gefäß. Auf den Temperatursensor kann dabei jedoch auch verzichtet werden, indem alternativ die Erhitzungs- und/oder Aufschäumzeiten aus der angesaugten Milchmenge, der Vorratstemperatur (die dann in der Regel wiederum durch einen weiteren Temperatursensor am vorzugsweise kühlbaren Milchvorratsbehältnis gemessen werden muss) und der Dampfmenge berechnet werden. Die Berechnung kann dabei über die Wärmeenergie der Milch gemäß Q = c x m x Δt erfolgen, wobei Q die Wärmeenergie, c die spezifische Wärmekapazität (die bei Milch 3.85 kJ/(kg x K) beträgt), m die Milchmasse und Δt die gewünschte Erwärmung in Kelvin ist. Hieraus lässt sich die benötigte Energie berechnen, woraus dann mit der spezifischen Wärmekapazität von Wasserdampf die benötigte Dampfmenge ermittelt werden kann. Der verwendete Dampfdruck (beispielsweise 1.2 bar) und der verwendete Düsenquerschnitt der Düse am Ende der Dampflanze (beispielsweise 1.5 bis 2.5 mm) ergeben dann die Zeitdauer die benötigt wird, um die benötigte Dampfmenge auszubringen.

Der erfindungsgemäß einsetzbare Getränkebereiter kann einen vorzugsweise einen NTC-Widerstand umfassenden Temperatursensor aufweisen, der bevorzugt an der Dampfdüse der Dampflanze positioniert wird und zum Messen der Temperatur von in dem externen Gefäß, in das die Dampflanze eingetaucht wird, befindlicher/m Milch und/oder Milchschaum ausgebildet wird.

Die Dampfausgabevorrichtung des erfindungsgemäß einsetzbaren Getränkebereiters kann einen Dampferzeuger sowie bevorzugt darüber hinaus auch eine Druckluftquelle zur Zufuhr von Dampf und/oder eines Dampf-Luft-Gemisches in den Dampfausgabekanal der Dampflanze, insbesondere in einen dampfstromaufwärts der Einmündung liegenden Abschnitt des Dampfausgabekanals der Dampflanze, umfassen.

Der vorteilhafterweise vorhandene weitere Dampfausgabekanal kann ebenso zur Abgabe von Dampf aus der Dampfausgabevorrichtung in das externe Gefäß ausgebildet werden wie der gemäß Anspruch 1 vorhandene (erste) Dampfausgabekanal der Dampflanze. Bevorzugt besteht dabei keine fluidische Verbindung oder zumindest stromabwärts der Einmündung der Milchzuleitung in den ersten Dampfausgabekanal keine fluidische Verbindung zwischen dem (ersten) Dampfausgabekanal gemäß Anspruch 1 einerseits und dem weiteren Dampfausgabekanal. Der weitere Dampfausgabekanal (der beispielsweise über die Steuereinheit angesteuert werden kann) kann so angesteuert werden, dass dieser nur während des zweiten Zeitraums (also während des Aufschäum- und/oder Erhitzzeitraums Δtₐₑ) Dampf abgibt, wobei dann der (erste) Dampfausgabekanal gemäß Anspruch 1 während dieser Zeit durch die Steuereinheit abgeschaltet werden kann. Das wechselweise Ein- und Ausschalten des Durchflusses durch die beiden Dampfausgabekanäle kann somit durch die Steuereinheit und bevorzugt darüber hinaus auf Basis von geeignet angeordneten Ventilen erfolgen. Der (erste) Dampfausgabekanal gemäß Anspruch 1 und der weitere Dampfausgabekanal können auch als parallel verlaufende Kanäle (Doppelrohr) ausgebildet werden.

Nachfolgend erfolgt die Beschreibung mehrerer Ausführungsbeispiele. Dabei zeigen:
- FIG. 1a und 1b: ein erstes Ausführungsbeispiel, das ein Klemmventil 12 in der Milchzuleitung 4 einsetzt.
- FIG. 2: ein zweites Ausführungsbeispiel, das anstelle des Klemmventils 12 in der Milchzuleitung 4 eine Milchpumpe 8 einsetzt.
- FIG. 3: eine spezifische erfindungsgemäß einsetzbare Konstruktion einer Dampflanze 1 (wie sie insbesondere auch in den Ausführungsbeispielen gemäß der FIG. 1a, 1b und 2 eingesetzt werden kann).

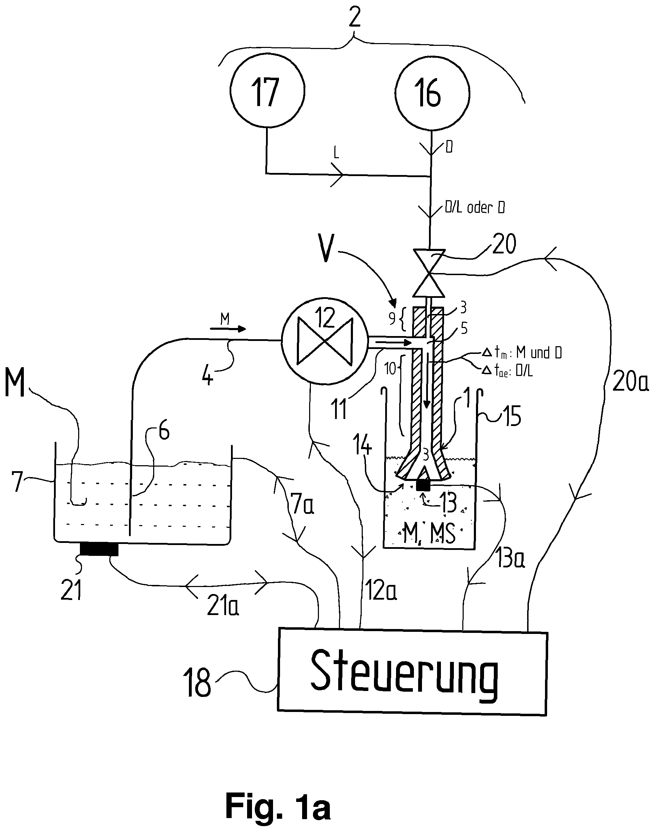

FIG. 1a skizziert schematisch den Aufbau und die Funktionsweise einer erfindungsgemäß einsetzbaren elektrisch betriebenen Kaffeemaschine in Form eines Kaffeevollautomaten mit einer erfindungsgemäßen Dampflanze.

Die Kaffeemaschine umfasst eine Dampfausgabevorrichtung 2 mit der erfindungsgemäß einsetzbaren Dampflanze 1 sowie dampfstromaufwärts der Dampflanze 1 mit einer Druckluftquelle 17 und einer Heißdampfquelle 16. Der Aufbau solcher Druckluftquellen und Dampfquellen sowie die Steuerung derselben ist dem Fachmann grundsätzlich bekannt, vergleiche hier beispielsweise die DE 44 45 436 A1 oder die DE 10 2011 077 776 A1, so dass auf die Beschreibung der genauen Funktionsweise dieser Quellen verzichtet wird. Eine Ausgabeleitung der Druckluftquelle 17, deren Förderrichtung mit einem Pfeil gekennzeichnet ist und die mit der Bezeichnung L (Luftzufuhr) versehen ist, mündet stromabwärts der Dampfquelle 16 in die Ausgabeleitung dieser Dampfquelle (letztere ist mit D für Dampfzufuhr bezeichnet). Stromabwärts der Mündung liegt somit ein (hinsichtlich des Verhältnisses des Luftanteils L und des Dampfanteils D einstellbares) Dampf-Luft-Gemisch D/L vor, das durch ein Dampfventil 20 geleitet werden kann, das in einer Zuleitung von den beiden Quellen 16, 17 zum Dampfausgabekanal 3 der erfindungsgemäß einsetzbaren Dampflanze 1 positioniert ist. Die Zufuhr von Luft L ist abschaltbar, so dass auch reiner Dampf D über das Ventil 20 in den Kanal 3 eingeleitet werden kann.

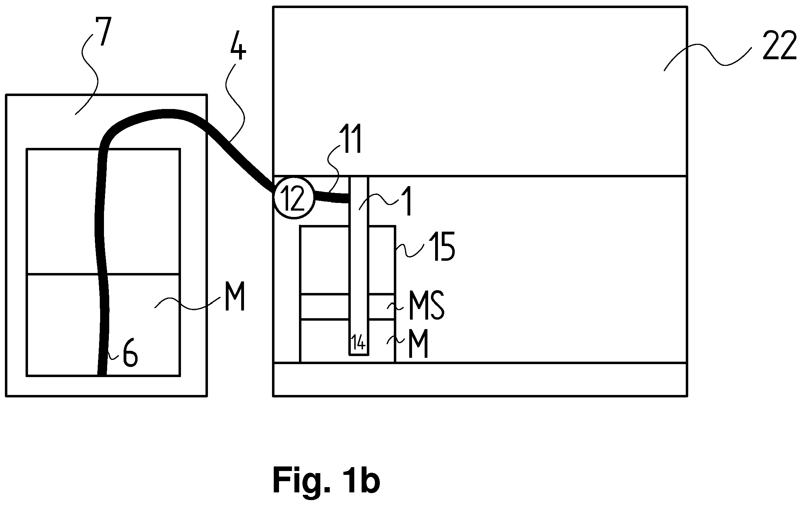

Fluidstromabwärts des Ventils 20 mündet die Zuleitung für das Dampf-Luft-Gemisch D/L außerhalb des Gehäuses 22 der Kaffeemaschine (vergleiche FIG. 1b) in das düsenabgewandte Ende der Dampflanze 1. Die Dampflanze 1 ist hier vollständig außerhalb des Gehäuses 22 der Kaffeemaschine ausgebildet und relative zum Gehäuse verschwenkbar (nicht gezeigt).

Fluidstromabwärts des düsenabgewandten Endes der Lanze 1 mündet seitlich unter einem Winkel von 90° eine Milchzuleitung 4 in den Dampfausgabekanal 3 der Dampflanze 1. Durch diese Einmündung 5 wird der Dampfausgabekanal 3 somit in zwei Abschnitte unterteilt, einen dampfstromaufwärts der Einmündung 5 liegenden Abschnitt 9 und einen dampfstromabwärts der Einmündung 5 liegenden Abschnitt 10 des Dampfausgabekanals 3. Der dampfstromaufwärts liegende Abschnitt 9 ist dabei als Einlass einer Venturidüse V ausgebildet, der dampfstromabwärts liegende Abschnitt 10 als Auslass dieser Venturidüse und der der Dampflanze 1 zugewandt liegende Abschnitt 11 der Milchzuleitung 4 (der in den Dampfausgabekanal 3 führt) bildet das Abnahmerohr dieser Venturidüse V. Zur Realisierung der Venturidüsenkonstruktion V ist der Rohrinnendurchmesser des stromaufwärts liegenden Abschnitts 9 mit hier 2 mm halb so groß wie der Rohrinnendurchmesser der beiden Abschnitte 10 und 11, der hier jeweils 4 mm beträgt.

Strömt somit Dampf D, Luft L und/oder ein Gemisch davon D/L durch den Abschnitt 9, so wird (bei geöffnetem Ventil 12, siehe nachfolgend) Milch M über die Leitung 4 in die Einmündung 5 und durch den stromabwärts liegenden Abschnitt 10 mitgerissen und strömt aus dem dem Abschnitt 9 gegenüberliegenden Ende (das mit der Düse 14 versehen ist) der Dampflanze 1 aus.

Stromaufwärts des in die Einmündung 5 führenden Abschnitts 11 der Milchzuleitung 4 ist in letzterer ein Klemmventil 12 zum Absperren und Wiederöffnen der Milchzuleitung 4 positioniert. Am stromaufwärtigen, also dem Abschnitt 11 gegenüberliegenden, Ende 6 ist die Milchzuleitung 4 so ausgebildet, dass dieses Ende 6 im Bodenbereich eines externen, kühlbaren Milchvorratsbehältnisses 7 endet. Zum Aufrechterhalten der Temperatur von in diesem Behältnis 7 befindlicher Milch M ist dieses Behältnis 7 mit einem Temperatursensor 21 versehen.

Auch das düsenseitige 14 Ende der Dampflanze 1 trägt einen Temperatursensor 13, mit dem die momentane Temperatur von Milch M oder einer bereits vorliegenden Milchschaummischung MS in einem externen Gefäß 15 (z.B. ein hohes, schlankes Gefäß, in dem das Aufschäumen der Milch erfolgen soll) erfasst werden kann.

Über bidirektionale Datenleitungen 7a, 12a, 13a, 20a und 21a sind das kühlbare Milchvorratsbehältnis 7, das Klemmventil 12, der Temperatursensor 13 an der Düse 14 der Dampflanze 1, das Dampfventil 20 sowie der (weitere) Temperatursensor 21 am kühlbaren Milchvorratsbehältnis 7 jeweils mit der zentralen Steuereinheit 18 des Kaffeevollautomaten verbunden. Über die Steuereinheit 18 können somit an die jeweiligen Bauelemente Steuersignale abgegeben werden und Datensignale dieser Bauelemente (beispielsweise erfasste Parameter oder auch Bestätigungssignale) erfasst werden. So kann die Steuereinheit 18 die Koordination des Öffnens und des Schließens der beiden Ventile 12, 20 über die Leitungen 12a und 20a übernehmen, die aktuelle Temperatur am Behältnis 7 über die Leitung 21a erfassen und darauf basierend gegebenenfalls die Kühlleistung des Behältnisses 7 über die Leitung 7a erhöhen oder verringern und das Aufschäumen der sich im externen Gefäß 15 befindenden Milch M dann beenden, wenn der Temperatursensor 13 das Erreichen einer vorbestimmten Milchschaumtemperatur über die Leitung 13a meldet.

Erfindungsgemäß kann somit der Betrieb wie folgt erfolgen: Zunächst wird die Lanze 1 samt ihrem düsenseitigen 14 Ende der Lanze 1 in das Gefäß 15 getaucht. Sodann schaltet der Bediener die Zufuhr von Milch M aus dem Behältnis 7 über einen (nicht gezeigten) Wahlschalter am Gehäuse 22 des Kaffeevollautomaten ein, wodurch ein Öffnen des Ventils 12 bei gleichzeitigem Öffnen des Ventils 20 vermittels der Steuereinheit 18 erfolgt. Die Luftzufuhr L aus der Quelle 17 bleibt dabei verschlossen, so dass lediglich Dampf D aus der Quelle 16 durch die Leitung 3 der Lanze 1 strömt und dabei gemäß des Venturieffekts in der Einmündung 5 Milch M über die Leitung 4 aus dem Behältnis 7 mitreißt. Die Ausströmungsgeschwindigkeit des Dampfes D ergibt sich aus dem konstanten Dampfdruck (1 bis 2 bar) und dem Düsenquerschnitt.

Ist genug Milch M vermittels des Dampfes D in das Gefäß 15 eingeströmt worden (oder ist eine vorbestimmte Zeit Δtₘ der Milchzuleitung M vergangen), so wird vermittels einer erneuten Schalterbetätigung (nicht gezeigt) am Gehäuse 22 über die Steuerung 18 auf Aufschäumbetrieb umgestellt. Dies erfolgt durch Schließen des Ventils 12, so dass keine weitere Milchansaugung über die Leitung 6, 4, 11 erfolgt. Stattdessen wird die Luftzufuhr der Quelle 17 über die Steuereinheit 18 (die Ansteuerung der beiden Quellen ist hier nicht im Detail gezeigt) geöffnet, so dass nun ein D/L-Gemisch mit vorgegebenem Mischverhältnis an Dampf D und Luft L durch das Ventil 20 und die Lanze 1 strömt. Somit wird im Düsenbereich 14 durch geeignete Konstruktion dieses Bereiches (solche Konstruktionen sind dem Fachmann an sich bekannt) die im Gefäß 15 befindliche Milch M aufschäumt. Das Aufschäumen kann dabei über eine vorbestimmte, mit der Steuereinheit 18 einstellbare Zeitdauer Δtₐₑ erfolgen oder wahlweise erst dann abgebrochen werden, wenn die Milchschaumtemperatur einen vorbestimmten Wert (was über den Temperatursensor 13 festgestellt wird) erreicht wird.

Somit kann in einem ersten Schritt Milch über einen Schlauch oder ein Rohr mit einem Durchmesser von 4 mm zugeführt werden, indem Dampf D über einen Rohrquerschnitt von hier 2 mm (allgemein können hier in der Regel Querschnitte von 1.8 bis 3 mm verwendet werden) und bei hoher Strömungsgeschwindigkeit (120°C und 1.2 bar) zugeführt wird, um die Milch M gemäß des Venturiprinzips mitzureißen und in das Gefäß 15 zu überführen. Die Milchzufuhr erfolgt dabei im rechten Winkel zum Dampf, um den Venturieffekt zu erzeugen und die Milch in das Aufschäumgefäß 15 zu pumpen. Durch den Dampfeintrag, der für das Pumpen verwendet wird, ergibt sich in der Regel ein Temperaturerhöhen von ca. 20 bis 25°C in der gepumpten Milch M. Beim nachfolgenden Aufschäumen im Zeitintervall Δtₐₑ wird in der Regel eine Temperatur der Milch im Gefäß 15 von etwa 60 bis 70°C erzielt. Zusätzliche Blenden (zur Reduktion des Milchzuflusses) und eine separate Aufschäumkammer, die genutzt werden müsste, um die Milch zu verwirbeln, bevor sie in ein externes Gefäß abgegeben werden kann, sind beim erfindungsgemäß einsetzbaren System somit nicht notwendig.

Das Klemmventil 12 kann so konstruiert werden, dass der Milchzufluss durch die Leitung 4 mediengetrennt freigegeben und wieder gesperrt werden kann.

Figur 1b skizziert schematisch die äußere Form des Aufbaus der in Figur 1a skizzierten Kaffeemaschine, die zeigt, dass das kühlbare Milchvorratsbehältnis 7 ein separates Gehäuse aufweisen kann. Mittels des stromaufwärtigen Endes 6 der Leitung 4 wird die Milch M über die Milchzuleitung 4, das darin angeordnete Klemmventil 12 sowie den stromabwärtigen, einmündenden Abschnitt 11 seitlich in den Dampfausgabekanal (hier nicht gezeigt) der Dampflanze 1 eingeströmt, um durch das düsenseitige 14 Ende der Dampflanze vermittels des Dampfes D in das Gefäß 15 gepumpt zu werden. Anschließend erfolgt die Aufschäumung durch Abgabe des D/L-Gemisches mit derselben Geschwindigkeit gegenüber der Geschwindigkeit des Pumpvorgangs, sodass die Milch M im Gefäß 15 zu Milchschaum MS aufgeschäumt wird. Wie Figur 1b skizziert, befindet sich die komplette Dampflanzenkonstruktion außerhalb des Gehäuses 22 des Kaffeevollautomaten.

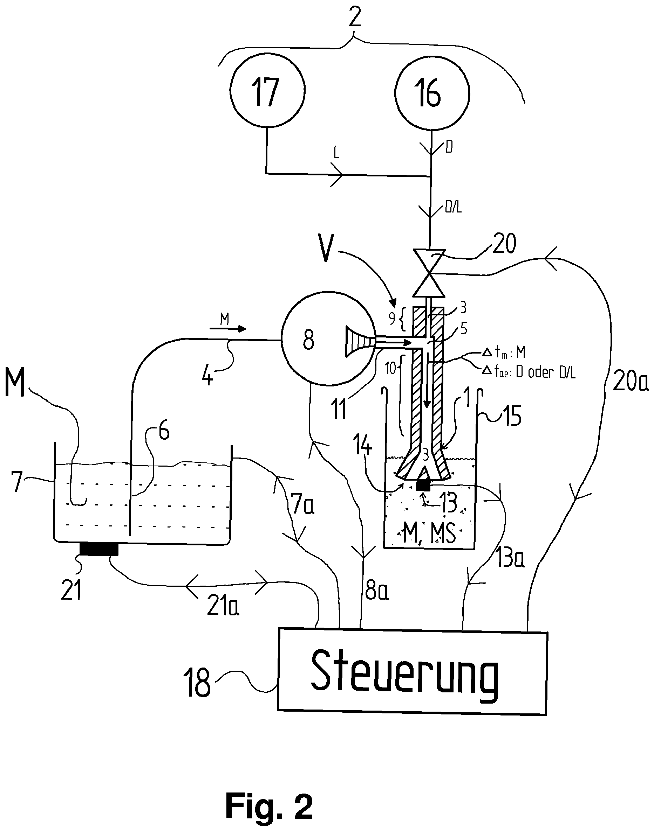

Figur 2 skizziert den Aufbau eines weiteren erfindungsgemäß einsetzbaren Kaffeevollautomaten mit erfindungsgemäß einsetzbarer Dampflanze. Der Aufbau ist grundsätzlich wie zu den Figuren 1a und 1b beschrieben, sodass nachfolgend nur die Unterschiede beschrieben werden.

Konstruktiv ist das Klemmventil 12 im Aufbau von Figuren 1a, 1b durch eine in der Milchzuleitung 4 positionierte Milchpumpe 8 in Form einer Zahnrad- oder Peristaltikpumpe (Schlauch-Quetschpumpe) ersetzt. Diese kann von der Steuereinheit 18 über die bidirektionale Datenleitung 8a angesteuert werden. Lediglich die Element 12, 12a aus Figur 1a entfallen somit.

Die geometrische Konstruktion der Dampflanze 1, also deren Dampfausgabekanal 3, deren Einmündung 5, deren Abschnitte 9 und 10 samt der Düse 14 mit dem Temperatursensors 13, ist wie zu den Figuren 1a und 1b beschrieben. Allerdings ist beim Einsatz einer Milchpumpe 8 die Konstruktion der Einmündung 5 als Venturidüse V nicht unbedingt notwendig und kann durch ein einfaches T-förmiges Leitungsstück ersetzt werden.

Mit der in Figur 2 gezeigten Konstruktion kann ein Zuleiten von Milch und ein anschließendes Aufschäumen und/oder Erhitzen von Milch wie folgt erfolgen: Zunächst wird über ein erstes Zeitintervall Δtₘ oder solange, bis im Gefäß 15 eine vorbestimmte Milchmenge M eingeleitet worden ist, bei verschlossenem Dampfventil 20 vermittels der Milchpumpe 8 Milch aus dem Milchvorratsbehältnis 7 über die Milchzuleitung 4, den Abschnitt 11, die Einmündung 5 und den Abschnitt 10 sowie die Düse 14 zum Auffüllen des Gefäßes 15 mit einer vorbestimmten Milchmenge in letzteres Gefäß gefördert. Sodann wird die Pumpe 8 abgeschaltet und das Ventil 20 wird vermittels der Steuereinheit 18 über die Leitung 20a geöffnet. Soll die im Gefäß 15 befindliche Milch M lediglich erhitzt werden, so wird lediglich Heißdampf D aus der Quelle 16 über ein definiertes Zeitintervall Δtₐₑ oder solange in das Gefäß 5 geströmt, bis der Temperatursensor 13 der Steuereinheit 18 das Erreichen einer vorbestimmten Milchtemperatur M von beispielsweise 70°C meldet. Anschließend wird das Ventil 20 geschlossen, sodass (bei nach wie vor mittels der Pumpe 8 verschlossener Leitung 4) das Gefäß 15 samt der darin befindlichen erhitzten Milch M von der Dampflanze 1 entfernt werden kann. Soll andererseits ein Aufschäumen der in das Gefäß 15 gepumpten Milch M erfolgen, so erfolgt bei abgestellter Pumpe 8 über ein dem ersten Zeitintervall Δtₘ nachfolgendes, zweites Zeitintervall Δtₐₑ die Zufuhr eines vorbestimmten D/L-Gemisches aus Luft L und Dampf D über das Ventil 20, die Abschnitte 9 und 10 sowie die Düse 14, um während dieses Zeitintervalls Δtₐₑ (oder ebenfalls bis eine vorbestimmte Temperatur erreicht ist) die Milch M im Gefäß 15 zu Milchschaum MS aufzuschäumen (und dabei gleichzeitig zu erhitzen). Anschließend erfolgt ein Verschließen des Ventils 20 bei nach wie vor abgestellter Pumpe 8, sodass das Gefäß 15 mit dem aufgeschäumten Milchschaum MS von der Dampflanze 1 entfernt werden kann.

Wird die Kaffeemaschine mit Pumpe 8 anstelle des Ventils 12 betrieben, so lässt sich aus der Fördermenge der Pumpe 8 die Dosierzeit für eine gewünschte Menge Milch im Gefäß 15 ableiten. Diese Konstruktion hat den Vorteil, dass die Milch durch das Pumpen in das Gefäß 15 (anders als bei Nutzung des Venturi-Effektes) nicht erwärmt wird. Im zweiten Schritt wird die Milchzuleitung 4 durch Abschalten der Pumpe 8 verschlossen und es wird Dampf (zum Erhitzen) oder ein Dampf-Luft-Gemisch (zum Erhitzen und Aufschäumen) in die Milch M im Gefäß 15 geleitet, bis eine vorbestimmte Zeit vergangen ist oder die gewünschte Temperatur erreicht wird. Die Temperatur kann wie bereits beschrieben über den Temperatursensor 13, vorzugsweise ein NTC-basierter Sensor, in der Schaumdüse erfasst werden. Wird keine Luft zugeführt, so wird die Milch nur erwärmt, da der Dampf in der Milch kondensiert und keine Blasen bildet; mit steigendem Anteil an Luft L im Gemisch D/L erhöht sich dann der Milchschaumanteil.

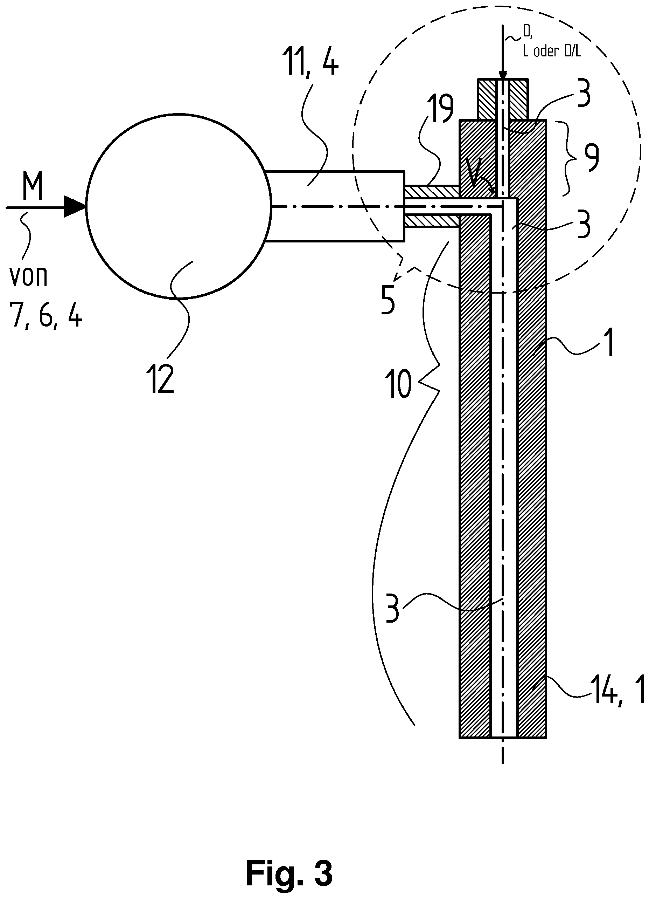

Figur 3 zeigt schließlich ein Beispiel für eine erfindungsgemäß einsetzbare Dampflanzenkonstruktion in einem Querschnitt in einer Ebene, in der die zentralen Längsachsen des Leitungsabschnitts 11 sowie des Dampfausgabekanals 3 liegen. Diese Dampflanze 1 kann in den in den beiden Figuren 1, 1a sowie 2 beschriebenen Kaffeemaschinen eingesetzt werden. Sie kann jedoch auch als separates Bauelement in Verbindung mit anderen Kaffeemaschinenkonstruktionen eingesetzt werden, indem die Dampflanze einer solchen Konstruktion entfernt und durch die in Figur 3 gezeigte Dampflanze ersetzt wird.

Identische Bezugszeichen beschreiben in Figur 3 wiederum identische Bauelement, wie sie bereits in den Figuren 1, 1a und 2 gezeigt sind, sodass deren Beschreibung weggelassen wird.

Wie Figur 3 detaillierter zeigt, ist der in die Einmündung 5 führende Abschnitt 11 der Milchzuleitung 4 ebenso wie die gesamte Milchzuleitung 4 (hier nicht gezeigt) als flexibler Silikonschlauch ausgebildet. Alternativ dazu (nicht gezeigt) ist auch eine Ausbildung des Abschnitts 11 bzw. der Leitung 4 als Milchzufuhrrohr aus Kunststoff möglich.

Im Bereich der Einmündung 5 hat die Dampflanze 1 einen als kurzer, starrer Rohrabschnitt ausgebildeten seitlichen, unter 90° in den Dampfausgabekanal 3 führenden Anschluss 19. Der Abschnitt 11 ist an den Anschluss 19 angeflanscht, indem der Innendurchmesser des Abschnitts 11 geringfügig kleiner ist als der Außendurchmesser des Rohrabschnitts des Anschlusses 19, sodass das dem Ventil 12 abgewandte Ende des Abschnitts 11 über das dem Dampfausgabekanal 3 abgewandte Ende des Anschlusses 19 gestülpt worden ist (Flexibilität des Silikonschlauchs) und dort kraftschlüssig verbleibt.

Der die beiden Abschnitte 9 und 10 des Dampfausgabekanals 3 und somit letzteren Kanal ausbildende, mit einer Bohrung für den Kanal 3 versehene, zylinderförmige Körper der eigentlichen Dampflanze 1 ist zusammen mit dem unter 90° wegführenden Anschluss 19 einstückig als Edelstahlrohrkonstruktion ausgebildet. An seinem der Düse 14 abgewandten Ende weist der Dampflanzenkörper eine Verjüngung auf, die der Verbindung mit der Zuleitung aus den Quellen 16, 17 und dem Ventil 20 dient. Diese Verbindung kann als Aufsteckverbindung oder als Gewindeverbindung ausgebildet sein. Die weitere Ausbildung der gezeigten Dampflanze ist wie zu den Figuren 1a, 1b und 2 beschrieben.

Alternativ (nicht gezeigt) ist es auch möglich, in der Ausführung Venturiprizip die Dampflanze mit zwei Kanälen (beispielsweise als Doppelrohr ausgebildet) zu versehen. Einer der Kanäle kann dann dazu verwendet werden, um Milch gemäß des Venturieffektes in das Gefäß 15 mitzureißen, bzw. zu pumpen, der andere Kanal kann dann ausschließlich dazu dienen, Dampf und/oder Luft zum Erhitzen und/oder Aufschäumen zuzuführen.

## Patentansprüche

1. Verfahren zum Erhitzen und/oder Aufschäumen von Milch (M) mit einem elektrisch betriebenen Getränkebereiter, insbesondere mit einer Kaffeemaschine, insbesondere mit einer Espressomaschine oder mit einem Kaffeevollautomaten,
wobei eine Milchzuleitung (4) an einen Dampfausgabekanal (3) einer an den Getränkebereiter angeschlossenen Dampflanze (1) angeschlossen wird,
***dadurch gekennzeichnet, dass***
über eine Steuereinheit (18) des Getränkebereiters ein oder mehrere Bauelement(e) des Getränkebereiters, nämlich eine die Dampflanze (1) umfassende Dampfausgabevorrichtung (2), ein Dampferzeuger (16), eine Druckluftquelle (17), eine Milchfördervorrichtung (8), ein Flussunterbrechungsmittel (12) und/oder ein Temperatursensor (13), so angesteuert wird/werden, dass zunächst über einen ersten vorbestimmten Milchzufuhrzeitraum Δtₘ oder bis zum Erreichen einer vorbestimmten durchgeleiteten Milchmenge Milch (M) aus einem externen Milchvorratsbehältnis (7) über die Milchzuleitung (4) und den Dampfausgabekanal (3) in ein getrennt von dem externen Milchvorratsbehältnis (7) separat ausgebildetes, externes Gefäß (15), in das die Dampflanze (1) eingetaucht worden ist, geleitet wird, bevor anschließend über einen zweiten vorbestimmten Aufschäum- und/oder Erhitzzeitraum Δtₐₑ oder bis eine vorbestimmte Temperatur erreicht ist, die sich nun in diesem externen Gefäß (15) befindende Milch (M) in diesem externen Gefäß (15) durch Zufuhr von Dampf (D) und/oder eines Dampf-Luft-Gemisches (D/L) über den Dampfausgabekanal (3) der Dampflanze (1) erhitzt und/oder aufgeschäumt wird.

## Claims

1. Method for heating and/or foaming milk (M) with an electrically-operated beverage preparation device, in particular with a coffee machine, in particular with an espresso machine or with a fully automatic coffee machine,
wherein a milk supply line (4) is connected to a steam outlet channel (3) of a steam lance (1), the steam lance (1) being connected to the beverage preparation device,
***characterised in that***
one or a plurality of component(s) of the beverage preparation device, namely a steam outlet device (2) comprising the steam lance (1), a steam generator (16), a compressed air source (17), a milk delivery device (8), a flow interruption means (12) and/or a temperature sensor (13) is/are actuated via a control unit (18) of the beverage preparation device such that milk (M) is firstly fed for a first predetermined milk supply period Δtₘ or until reaching a predetermined quantity of milk supplied from an external milk storage container (7) through the milk supply line (4) and the steam outlet channel (3) into an external, separately formed vessel (15), that is separated from the external milk storage container (7) and into which the steam lance (1) has been submerged, before the milk (M), now located in this external vessel (15), is then heated and/or foamed in this external vessel (15) for a second predetermined foaming and/or heating period Δtₐₑ or until reaching a predetermined temperature by supplying steam (D) and/or a steam/air mixture (D/L) via the steam outlet channel (3) of the steam lance (1).

## Revendications

1. Procédé pour chauffer et/ou faire mousser du lait (M) avec un appareil électrique de préparation de boissons, en particulier avec une machine à café, en particulier avec une machine à expresso ou une machine à café entièrement automatique,
dans lequel une conduite d'alimentation en lait (4) est raccordée à un canal de sortie de vapeur (3) d'une buse de vapeur (1) raccordée à l'appareil de préparation de boissons,
***caractérisé en ce que**,*
par l'intermédiaire d'une unité de commande (18) de l'appareil de préparation de boissons, un ou plusieurs éléments de l'appareil de préparation de boissons, à savoir un dispositif de sortie de vapeur (2) comprenant la buse de vapeur (1), un dispositif de production de vapeur (16), une source d'air comprimé (17), un dispositif de transport de lait (8), un moyen d'interruption de flux (12) et/ou un capteur de température (13), sont pilotés de telle sorte que, d'abord, pendant un premier intervalle de temps d'alimentation en lait Δtₘ prédéterminé ou jusqu'à ce qu'une quantité de lait conduite prédéterminée soit atteinte, du lait (M) est acheminé d'un réservoir de lait externe (7) via la conduite d'alimentation en lait (4) et le canal de sortie de vapeur (3) jusque dans un récipient externe (15) qui est réalisé séparément du réservoir de lait externe (7), dans lequel la buse de vapeur (1) a été plongée, avant que, ensuite, pendant un deuxième intervalle de temps de moussage et/ou de chauffage Δtₐₑ prédéterminé ou jusqu'à ce qu'une température prédéterminée soit atteinte, le lait (M), se trouvant maintenant dans ce récipient externe (15) est chauffé et/ou moussé dans ce récipient externe (15) par l'amenée de vapeur (D) et/ou d'un mélange de vapeur et d'air (D/L) par l'intermédiaire du canal de sortie de vapeur (3) de la buse de vapeur (1).
